# EUROPÄISCHE PATENTSCHRIFT

(11) **EP 1 011 846 B1**
(45) Veröffentlichungstag und Bekanntmachung des Hinweises auf die Patenterteilung: **19.03.2003**
(21) Anmeldenummer: 98949981.9
(22) Anmeldetag: 26.08.1998
(51) Int. Cl.: B01D 53/26

(54) **ABSORPTIONSEINRICHTUNG UND ENTSPRECHENDE AUSWECHSELBARE VERPACKUNG**
ABSORPTION DEVICE AND CORRESPONDING EXCHANGEABLE PACKAGING
DISPOSITIF D'ABSORPTION ET EMBALLAGE REMPLACABLE CORRESPONDANT

(30) Priorität: 27.08.1997 NL 1006852
(43) Veröffentlichungstag der Anmeldung: 28.06.2000
(73) Patentinhaber: Henkel KGaA, 40589 Düsseldorf (DE)
(72) Erfinder: KELDERS, Johannes, Hubertus, Jozef, Maria, NL-5151 RL Drunen (NL)
(74) Vertreter: Bartelds, Erik
(86) Internationale Anmeldenummer: EP9805500
(87) Internationale Veröffentlichungsnummer: WO99010083

(56) Entgegenhaltungen:
- EP-A- 0 212 029
- FR-A- 2 234 029
- FR-A- 2 750 618
- GB-A- 2 067 428
- US-A- 2 341 893
- US-A- 5 443 626

## Beschreibung

Die Erfindung bezieht sich auf eine Einrichtung zur Absorption von Feuchtigkeit aus der Luft. Eine derartige Absorptionseinrichtung ist bekannt.

Die bekannte Einrichtung weist ein aus Kunststoff gefertigtes, formfestes Gehäuse auf, das aus zwei trennbar miteinander verbundenen Teilen besteht. Der obere Teil des Gehäuses bildet dabei ein Aufnahmeteil, das zur Aufnahme einer oder mehrerer mit einem Absorptionsmittel gefüllter Kassetten dient. Der untere Teil des Gehäuses bildet ein Auffangteil, in dem sich die der Luft durch das Absorptionsmittel in den Kassetten entzogene Feuchtigkeit ansammelt. Die Kassetten mit dem Absorptionsmittel können eine feste, standardisierte Größe aufweisen, damit sie auf einfache Weise zwischen vielen unterschiedlichen Absorptionseinrichtungen auswechselbar sind.

Die bekannte Absorptionseinrichtung hat den Nachteil, daß sie vergleichsweise materialaufwendig ist, wodurch die Einrichtung verhältnismäßig teuer ist und bei der Entsorgung der verbrauchten Einrichtung viel Abfall anfällt. Auch die bei der bekannten Einrichtung verwendeten Kassetten gehen mit einem verhältnismäßig großen Kunststoffmaterialaufwand und somit einem großen Kostenaufwand einher. Letzteres ist insbesondere deshalb ein Nachteil, weil diese Kassetten nach dem Verbrauch des darin enthaltenen Absorptionsmittels ausgewechselt werden. Die Kassetten können zwar so ausgelegt werden, daß sie sich öffnen und erneut mit dem Absorptionsmittel abfüllen lassen, doch dieses Verfahren ist vergleichsweise zeitaufwendig.

Weitere gattungsgemäße Einrichtungen sind in FR-A-2234029 und US-A-5443626 beschrieben. Die flexible Verpackung ist trennbar mit dem Träger verbunden.

Die Erfindung sieht daher eine Absorptionseinrichtung der oben beschriebenen Art vor, bei der die erwähnten Nachteile nicht auftreten. Letzteres wird erfindungsgemäß durch eine Einrichtung gemäß Anspruch 1 erreicht. Dadurch, daß für das Absorptionsmittel eine flexible Verpackung wie beispielsweise ein Beutel verwendet wird, ist der damit verbundene Materialaufwand gering.

Vorzugsweise weist der Träger Teile zur Aufnahme desselben in eine formfeste Halterung einer standardisierten Größe auf. Auf diese Weise kann die Absorptionseinrichtung erfindungsgemäß ebenfalls anstelle einer herkömmlichen auswechselbaren Kassette verwendet werden.

Wenn der Träger Teile zur Aufhängung desselben aufweist (wie beispielsweise in Form eines trennbar mit einer Basis des Trägers verbundenen Hakens), kann die Absorptionseinrichtung selbständig ohne das Gehäuse der herkömmlichen Absorptionseinrichtung verwendet werden. Die Einrichtung kann in dem Fall beispielsweise in einem Kleiderschrank aufgehängt werden.

Die Verpackung(en) ist (sind) trennbar mit dem Träger verbunden, so daß sie leicht ausgewechselt werden kann (können), wenn das darin enthaltene Absorptionsmittel verbraucht ist. Der Träger weist Klemmteile auf zur Befestigung der Verpackung(en) an dem Träger.

Eine robuste und leicht trennbare Ausführung des Trägers wird erreicht, wenn die Klemmteile aus mindestens einem, aber vorzugsweise zwei gelenkig mit der Basis des Trägers verbundenen Flügeln bestehen.

Damit die Absorptionseinrichtung ohne einen separaten, darunter aufgestellten Auffangbehälter verwendet werden kann, weist die Einrichtung vorzugsweise mindestens einen an der Unterseite mit der (den) Verpackung(en) verbundenen Behälter zum Auffangen der Feuchtigkeit auf, wobei der (die) Auffangbehälter aus einem flexiblen Material hergestellt sein kann (können), indem der (die) Behälter beispielsweise als Einheit mit der (den) Verpackung(en) hergestellt ist (sind).

Die Erfindung wird im folgenden anhand einiger Beispiele erläutert, wobei auf beiliegende Zeichnung mit folgenden Abbildungen verwiesen wird:
Abbildung 1 zeigt eine erste Ausführung einer herkömmlichen Absorptionseinrichtung im Querschnitt;
Abbildung 2 zeigt die in Abbildung 1 wiedergegebene Einrichtung im Längsschnitt entlang der Linie II-II;
Abbildung 3 zeigt das Aufhängeteil der in den Abbildungen 1 und 2 wiedergegebenen Absorptionseinrichtung in der Seitenansicht;
Abbildung 4 zeigt das Aufnahmeteil dieser Absorptionseinrichtung in der Aufsicht;
Abbildung 5 zeigt die Halteteile dieser Einrichtung in der Vorderansicht;
Abbildung 6 zeigt eine zweite Ausführung der herkömmlichen Absorptionseinrichtung im Längsschnitt;
Abbildung 7 zeigt die in Abbildung 6 wiedergegebene Einrichtung im Querschnitt entlang der Linie VII-VII;

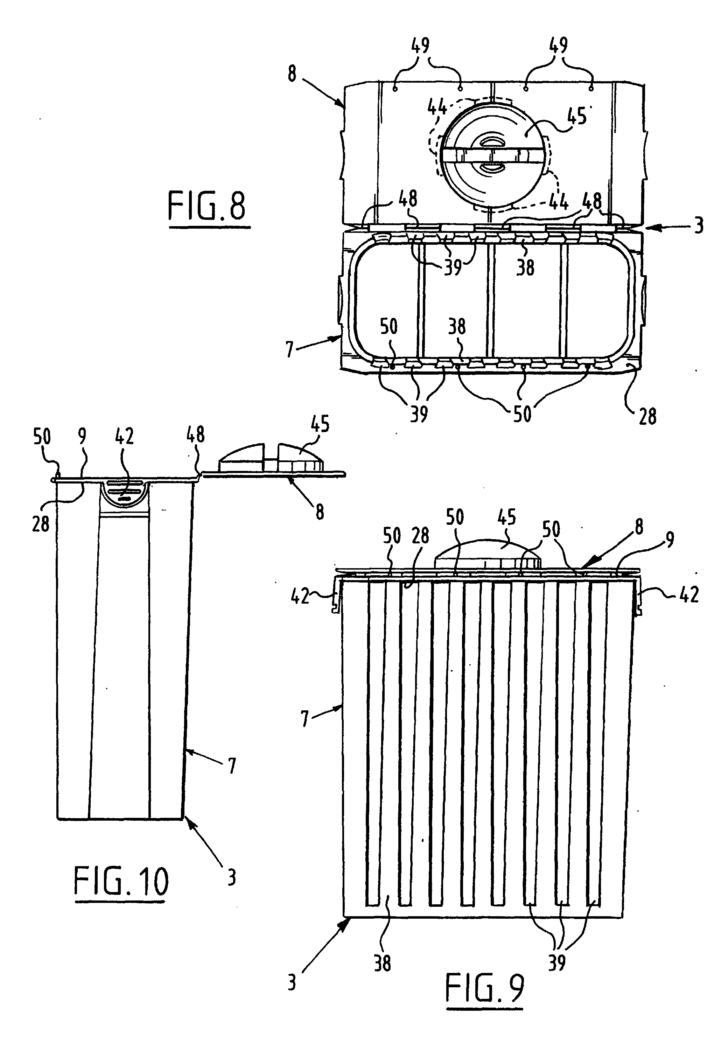

Abbildung 8 zeigt eine herkömmliche auswechselbare Verpackung für die in den Abbildungen 1-7 wiedergegebene Absorptionseinrichtung in der Aufsicht;
Abbildung 9 und 10 zeigen die in Abbildung 8 wiedergegebene Verpackung in der Vorder- beziehungsweise Seitenansicht;
Abbildung 11 zeigt einen Träger zur Verwendung desselben in der erfindungsgemäßen Ausführung der Absorptionseinrichtung in perspektivischer Ansicht;
Abbildung 12 zeigt eine erste erfindungsgemäße Ausführung der Absorptionseinrichtung in perspektivischer Ansicht, die aus dem in Abbildung 11 wiedergegebenen Träger und einer daran aufgehängten flexiblen Verpackung besteht; und
Abbildung 13 zeigt eine zweite erfindungsgemäße Ausführung der Absorptionseinrichtung, die einen Aufhängehaken und einen Auffangbehälter aufweist.

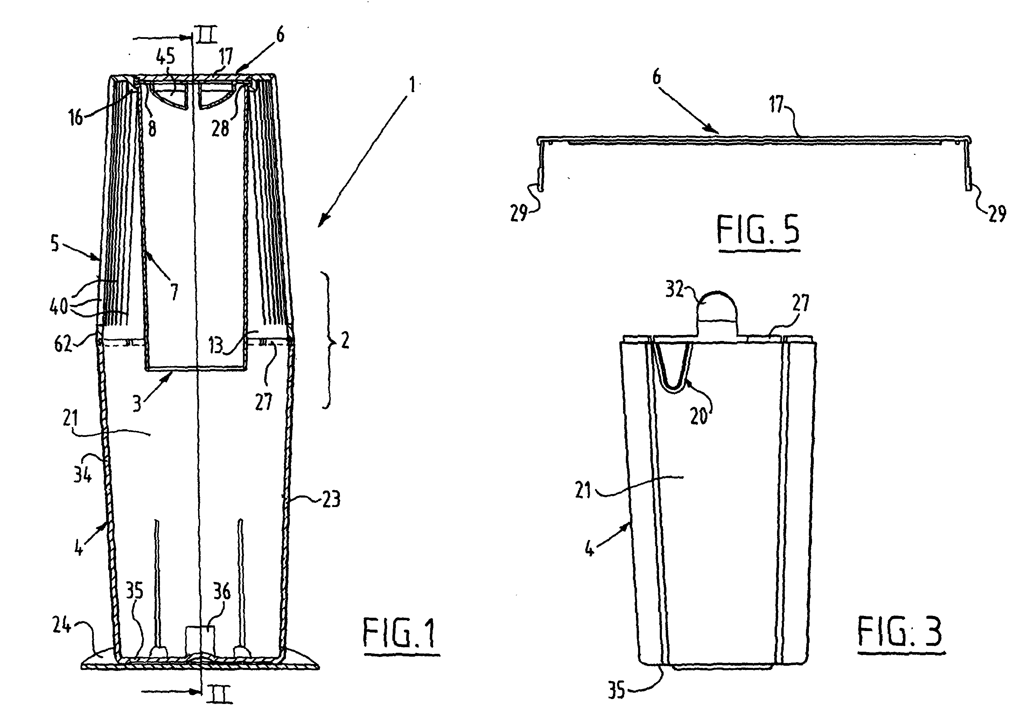

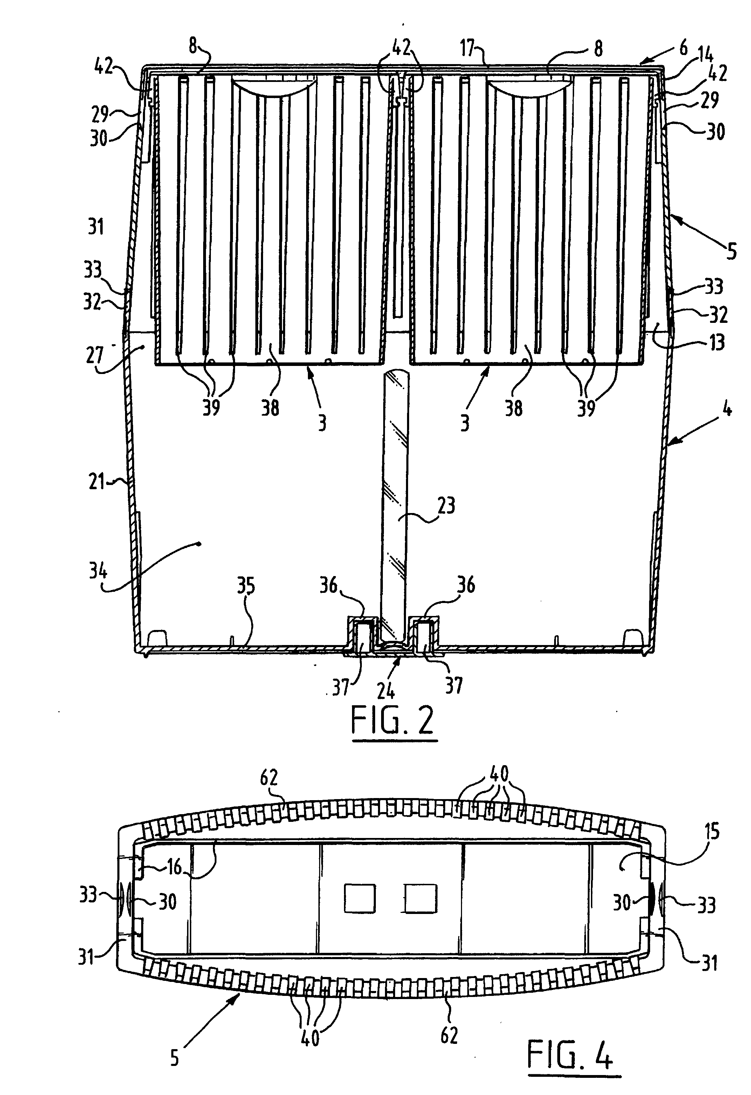

Eine herkömmliche Absorptionseinrichtung 1 (Abbildung 1) weist eine Halterung 2 auf, in der eine auswechselbare Kassette 3 angebracht ist. Die Halterung 2 besteht aus einem Auffangteil 4 und einem darauf befestigten Aufnahmeteil 5, das die eigentliche Kassette 3 aufnimmt und sie mittels Halteteilen 6 fixiert. Das Auffangteil 4 dient dazu, die Feuchtigkeit oder das Wasser, welche(s) der Luft durch das in der Kassette 3 enthaltene Absorptionsmittel entzogen wird, aufzufangen. Das Aufhängeteil weist deswegen in einer-der Seitenwände 34 ein Sichtfenster 23 auf, so daß festgestellt werden kann, ob sich darin bereits Flüssigkeit angesammelt hat, und weist außerdem eine Ausflußöffnung in Form eines Ausgießers 20 auf, die sich am oberen Rand 27 einer Seitenwand 21 des Auffangbehälters 4 befindet. Damit die Absorptionseinrichtung 1 trotz ihrer vergleichsweise hohen und schlanken Form dennoch stabil auf einen Untergrund aufgesetzt werden kann, ohne daß die Gefahr besteht, daß die Einrichtung umfallen könnte und die darin angesammelte Feuchtigkeit auslaufen würde, weist die Einrichtung an der Unterseite einen abtrennbaren Fuß 24 auf, der quer zur Absorptionseinrichtung 1 verläuft und beidseitig darunter hervorragt. Der Fuß 24 weist einige Stifte 37 auf, die in Aussparungen 36 im Boden 35 des Auffangteils 4 greifen.

Das Aufnahmeteil 5 ist trennbar mit dem Auffangteil 4 verbunden. Dazu weist das Aufnahmeteil 5 im wiedergegebenen Beispiel an der Unterseite 13 zwei Öffnungen 33 in dessen Querrändern 31 auf. In diese Öffnungen greifen elastisch-biegsame hakenförmige Arme 32, die sich am oberen Rand 27 des Auffangteils 4 befinden. Damit die feuchte Luft mit dem Absorptionsmittel in den Kassetten 3 in Berührung kommen kann, weist das Aufnahmeteil 5 in den Längsseiten 62 eine große Zahl schlitzförmiger Öffnungen 40 auf. Auch jede Kassette 3 weist in den Längsseiten 38 schlitzförmige Öffnungen 39 auf, durch die die feuchte Luft in die Kassette 3 hineinströmen und mit dem darin enthaltenen Absorptionsmittel in Berührung kommen kann.

Zur Aufnahme der Kassetten 3 weist das Aufnahmeteil 5 auf der vom Auffangteil 4 abgewandten Seite 14 eine Öffnung 15 auf, deren Form und Größe im wiedergegebenen Beispiel so gewählt wurden, daß zwei Kassetten 3 in Längsrichtung nebeneinander aufgenommen werden können. Diese Kassetten 3 ruhen dabei mit ihrem vorspringenden Umfangsrand 28 auf dem an der Öffnung 15 vorspringenden Umfangsrand 16 des Aufnahmeteils 5. Die Kassetten 3 werden mittels Halteteilen 6 im Aufnahmeteil 5 befestigt. Im wiedergegebenen Beispiel bestehen diese Halteteile 6 aus einem Verschluß 17, der die gesamte Aufnahmeöffnung 15 umfaßt und an den Enden elastisch-biegsame hakenförmige Arme 29 aufweist (Abbildung 5). Diese hakenförmigen Arme 29 können in Öffnungen 30 an der Oberseite des Aufnahmeteils 5 greifen. Auf diese Weise werden also die beiden Kassetten 3 zwischen den Rand 16 des Aufnahmeteils 5 und den Verschluß 17 geklemmt. Im übrigen könnte in dieser Ausführung der Absorptionseinrichtung 1 ebenfalls auf eine der beiden Kassetten 3 verzichtet werden, wenn die Luft beispielsweise vorübergehend vergleichsweise trocken sein sollte. Der Verschluß 17 würde auch diese eine Kassette 3 stabil festklemmen.

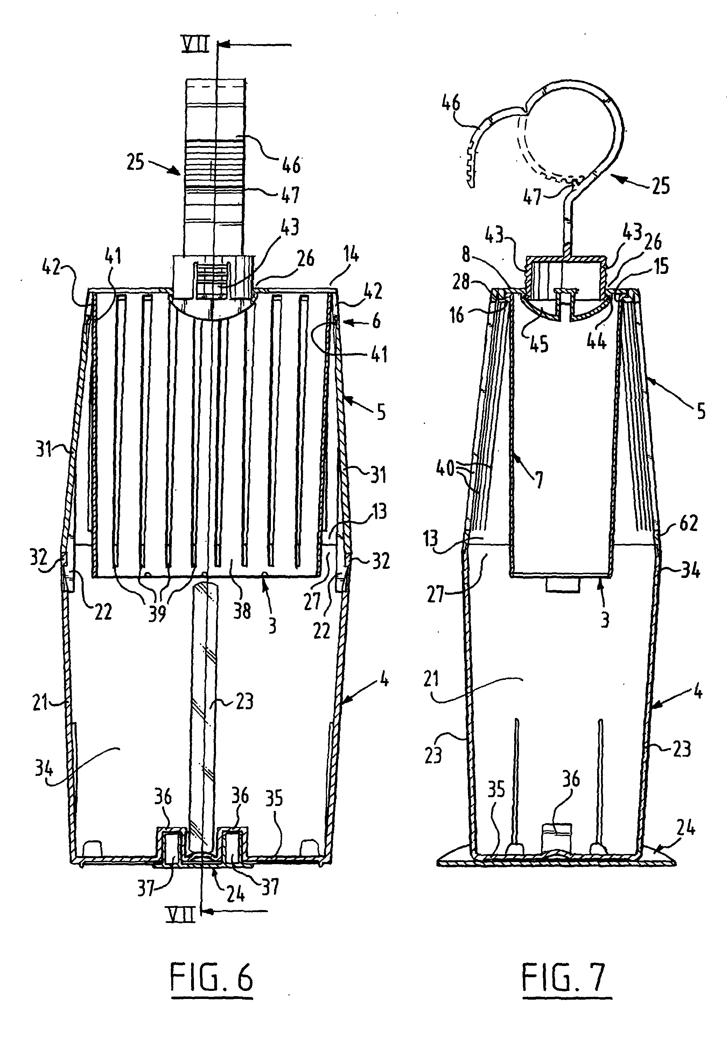

Wenn lediglich eine einzige Kassette mit Absorptionsmittel verwendet wird, ist es jedoch ebenfalls möglich, dazu eine andere Ausführung der herkömmlichen Absorptionseinrichtung 1 zu verwenden (Abbildung 6), bei der Form und Größe der Aufnahmeöffnung 15 des Aufnahmeteils 5 genau einer Einzelkassette 3 angepaßt sind. Dabei wird zur Fixierung der Kassette 3 im Aufnahmeteil 5 kein separater Verschluß verwendet, sondern das Aufnahmeteil 5 weist stattdessen in den Querseiten hakenförmige Ränder 41 auf, hinter die jeweils ein elastisch-biegsamer hakenförmiger Ansatz 42 der Kassette 3 geklemmt werden kann. Obwohl diese kleinere Absorptionseinrichtung 1 im wiedergegebenen Beispiel ebenfalls einen Fuß 24 aufweist, ist diese Einrichtung auch zum Aufhängen geeignet (beispielsweise in einem Schrank, in dem Kleidungsstücke aufbewahrt werden). Dazu weist die Einrichtung 1 an der Oberseite einen abtrennbaren Haken 25 auf. Dieser Haken ist im wiedergegebenen Beispiel mit der Oberseite 26 der Kassette 3 verbunden, die ihrerseits mit der Oberseite 14 des Aufnahmeteils 5 verbunden ist, das wiederum mit dem Auffangteil 4 verbunden ist. Für die letztgenannte Verbindung werden im wiedergegebenen Beispiel hakenförmige Arme 22 an der Unterseite des Aufnahmeteils 5 verwendet, die unter hakenförmige Ränder 32 des Auffangteils 4 greifen. Der Haken 25 ist mittels elastisch-biegsamer hakenförmiger Arme 43, die hinter hakenförmige Ränder 44 der Aussparung greifen, in die Aussparung 45 in der Klappe 8 der Kassette 3 geklemmt. Im wiedergegebenen Beispiel handelt es sich bei dem Haken 25 um einen geschlossenen Haken mit einem gelenkigen Schlußteil 46, das hinter eine Schnappnase 47 greifen kann. Auf diese Weise wird verhindert, daß die aufgehängte Absorptionseinrichtung 1, in der sich im Laufe der Zeit relativ viel Feuchtigkeit ansammeln wird, sich löst und herunterfällt.

Die herkömmliche Kassette 3, die bei den bisher wiedergegebenen Ausführungen der herkömmlichen Absorptionseinrichtung 1 verwendet wird, ist formfest mit einem Behälterkörper 7, der an der Oberseite 9 offen ist und mittels einer Klappe 8 geschlossen wird. Die Klappe 8 ist mittels Scharnieren 48 mit dem Behälterkörper 7 verbunden. Der Behälterkörper 7, der wie gesagt schlitzförmige Öffnungen 39 zum Einströmen der feuchten Luft aufweist, dient zur Aufnahme des Absorptionsmittels. Dabei kann die Klappe 8 nach Abfüllung des Behälterkörpers 7 zwar mittels einer Schnappverbindung geschlossen werden, damit sie sich später wieder leicht öffnen läßt und das Absorptionsmittel folglich ausgewechselt werden kann, doch im wiedergegebenen Beispiel wird die Klappe 8 nach Abfüllung des Behälterkörpers 7 daran festgeschweißt. Dazu weist die Klappe 8 einige Öffnungen 49 auf, in die beim Schließen - -der Klappe 8 die am Rand 28 des Behälterkörpers 7 angebrachten Stifte 50 greifen. Durch kurzes Erhitzen der herausragenden Teile dieser Stifte 50 wird die Klappe 8 am Behälterkörper 7 festgeschweißt.

Obwohl die oben beschriebenen Varianten der herkömmlichen Absorptionseinrichtung und die einschlägigen Kassetten sich in der Praxis gut bewähren, sind sie vergleichsweise materialaufwendig und folglich relativ kostspielig.

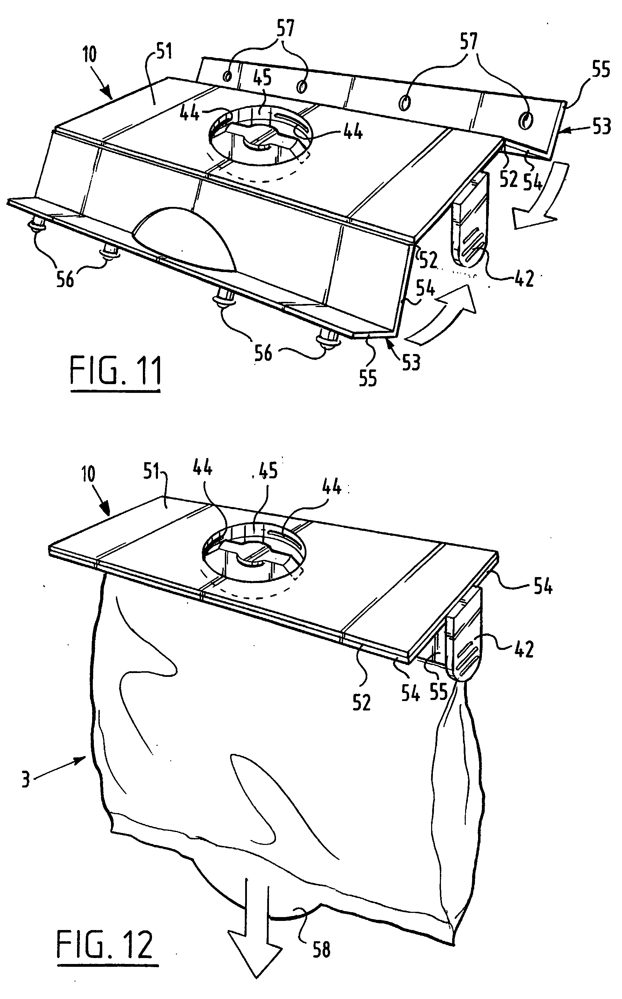

Die erfindungsgemäße Absorptionseinrichtung 1 wird zu diesem Zweck dadurch gekennzeichnet, daß sie flexibel ist. Die Einrichtung besteht aus einem Träger 10 und einer damit verbundenen flexiblen Verpackung 11, in der das Absorptionsmittel enthalten ist. Die flexible Verpackung 11 hängt dabei an dem Träger 10 (Abbildung 11).

Das Verbindungsstück 51 des Trägers weist Teile zur Befestigung der flexiblen Verpackung 11 auf. Diese Klemmteile bestehen im wiedergegebenen Beispiel aus Klemmflügeln 53 an den Längsseiten des Verbindungsstücks, die damit mittels Scharnieren 52 verbunden sind. Jeder Flügel 53 ist L-förmig und besitzt ein Bein, dessen Breite in etwa der Hälfte der Breite des Verbindungsstücks 51 entspricht, sowie einen quer verlaufenden Außenrand 55. Einer der Außenränder 55 weist dabei vorspringende Stifte 56 auf, während der andere Außenrand 55 an den entsprechenden Stellen Öffnungen 57 aufweist. Zur Befestigung der flexiblen Verpackung 11 am Träger 10 wird die flexible Verpackung 11 zwischen den Flügeln 53 gehalten, wonach die Flügel zusammengedrückt werden, bis die Stifte 56 fest in den Öffnungen 57 einrasten. Die Verpackung 11 ist auf diese Weise also trennbar mit dem Träger 10 verbunden und kann ausgewechselt werden, sobald das darin enthaltene Absorptionsmittel verbraucht ist. Die Menge des in diesem Fall zu entsorgenden Verpackungsmaterials ist minimal.

Der Träger 10 kann, nachdem daran die Verpackung 11 befestigt wurde, mittels der elastischen hakenförmigen Arme 42 an die herkömmliche Absorptionseinrichtung der Abbildungen 6 und 7 oder die herkömmliche Absorptionseinrichtung der Abbildungen 1 und 2 festgeklemmt werden und mittels des Verschlusses 17 darin befestigt werden. Vor dem Gebrauch der Verpackung 3 muß dabei übrigens noch eine Außenhülle 58 entfernt werden, die verhindern soll, daß das Absorptionsmittel in der Verpackung 3 der Luft bereits während Transport und Lagerung Feuchtigkeit entziehen würde und dadurch nahezu verbraucht wäre, wenn die Verpackung 3 den Endverbraucher erreicht.

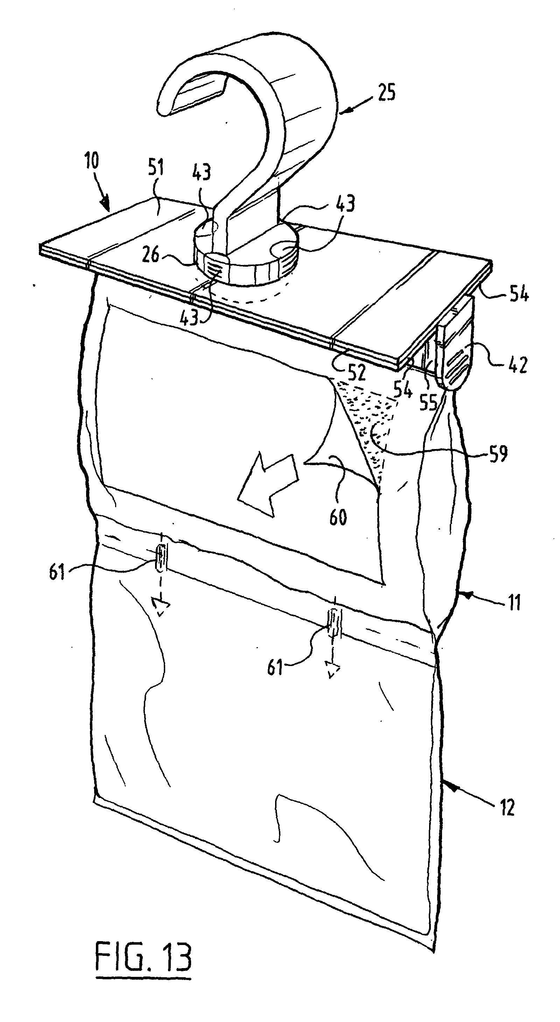

Der Träger 10 kann im übrigen ebenfalls eine Vertiefung 45 mit hakenförmigen Rändern 44 aufweisen, so daß die Absorptionseinrichtung 1 ebenfalls an der Oberseite 26 mit einem hakenförmigen Aufhänger 25 verbunden werden kann (Abbildung 13). Die Absorptionseinrichtung 1 kann auf diese Weise auch ohne Halterung 2 verwendet werden. In diesem Fall kann außerdem an der Unterseite der flexiblen Verpackung 11 ein damit als Einheit verbundener Auffangbehälter 12 zum Auffangen der Feuchtigkeit angebracht sein, der über Öffnungen 61 an der Unterseite der flexiblen Verpackung 11 mit derselben in Verbindung steht. Auf diese Weise wird verhindert, daß ein separater Auffangbehälter unter der Einrichtung angebracht werden müßte. Statt der Außenhülle 58 in Abbildung 12 kann die flexible Verpackung 11 dabei eine entfernbare Folie 60 aufweisen, die den luftdurchlässigen Teil 59 der Verpackung 11 abdeckt. Vor dem Gebrauch kann diese Folie 60 entfernt werden, wonach die mit dem Absorptionsmittel gefüllte, flexible Verpackung 11 und der darunter angebrachte Auffangbehälter 12 in Verbindung mit dem Träger 10 eine komplette Absorptionseinrichtung bilden.

Obwohl die Erfindung oben anhand einiger Beispiele erläutert wurde, ist für Fachleute erkennbar, daß sich die Erfindung nicht darauf beschränkt. Der Gegenstand der Erfindung wird demnach ausschließlich durch folgende Patentansprüche bestimmt.

## Patentansprüche

1. Einrichtung zur Absorption der Feuchtigkeit a der Luft, die aus mindestens einem Träger und mindestens einer trennbar damit verbundenen, mit einem Absorptionsmittel gefüllten, flexiblen Verpackung besteht, **dadurch gekennzeichnet, daß** der Träger Klemmteile zur trennbaren Befestigung der Verpackung(en) an dem Träger aufweist.

2. Absorptionseinrichtung nach Anspruch 1, **dadurch gekennzeichnet, daß** die Klemmteile aus mindestens einem gelenkig mit der Basis des Trägers verbundenen Flügel bestehen.

3. Absorptionseinrichtung nach Anspruch 2, **gekennzeichnet durch** zwei beiderseits der Basis angebrachte, miteinander zu verbindende Klemmflügel.

4. Absorptionseinrichtung nach einem der vorangegangenen Ansprüche, **dadurch gekennzeichnet, daß** der Träger Teile zur Aufnahme desselben in eine formfeste Halterung einer standardisierten Größe aufweist.

5. Absorptionseinrichtung nach einen der vorangegangenen Ansprüche, **dadurch gekennzeichnet, daß** der Träger Teile zur Aufhängung desselben aufweist.

6. Absorptionseinrichtung nach Anspruch 5, **dadurch gekennzeichnet, daß** die Aufhängeteile aus mindestens einem trennbar mit einer Basis des Trägers verbundenen Haken bestehen.

7. Absorptionseinrichtung nach einem der vorangegangenen Ansprüche, **gekennzeichnet durch** mindestens einen an der Unterseite mit der (den) Verpackung(en) verbundenen Behälter zum Auffangen der Feuchtigkeit.

8. Absorptionseinrichtung nach Anspruch 7, **dadurch gekennzeichnet, daß** der (die) Auffangbehälter aus einem flexiblen Material hergestellt ist (sind).

9. Absorptionseinrichtung nach Anspruch 7 oder 8, **dadurch gekennzeichnet, daß** der (die) Auffangbehälter als Einheit mit der (den) Verpackung(en) hergestellt ist (sind).

## Claims

1. Device for absorbing moisture from the air, consisting of at least one carrier and at least one flexible packaging, separably connected thereto and filled with an absorption agent, **characterised in that** the carrier has clamping parts for separable fastening of the packaging(s) to the carrier.

2. Absorption device according to claim 1, **characterised in that** the clamping parts consist of at least one wing connected in articulated manner to the base of the carrier.

3. Absorption device according to claim 2, **characterised by** two clamping wings to be connected to one another, attached on both sides of the base.

4. Absorption device according to one of the preceding claims, **characterised in that** the carrier has parts for receiving same into a non-deformable holder of a standardised size.

5. Absorption device according to one of the preceding claims, **characterised in that** the carrier has parts for hanging up same.

6. Absorption device according to claim 5, **characterised in that** the hanging up parts consist of at least one hook separably connected to a base of the carrier.

7. Absorption device according to one of the preceding claims, **characterised by** at least one container, connected to the packaging(s) on the underside, for catching the moisture.

8. Absorption device according to claim 7, **characterised in that** the catching container(s) is/are made of a flexible material.

9. Absorption device according to claim 7 or 8, **characterised in that** the catching container(s) is/are made as a unit with the packaging(s).

## Revendications

1. Dispositif d'absorption de l'humidité de l'air qui est constitué d'au moins un support et d'au moins un emballage flexible rempli d'un absorbant et relié de manière séparable au support, **caractérisé en ce que** le support comporte des pièces de serrage pour la fixation séparable de l'emballage (des emballages) sur le support.

2. Dispositif d'absorption selon la revendication 1, **caractérisé en ce que** les pièces de serrage sont constituées d'au moins une ailette reliée de manière articulée à la base du support.

3. Dispositif d'absorption selon la revendication 2, **caractérisé par** deux ailettes de serrage placées des deux côtés de la base et à relier entre elles.

4. Dispositif d'absorption selon l'une des revendications précédentes, **caractérisé en ce que** le support comporte des éléments qui permettent de le loger dans un dispositif de support indéformable de taille standardisée.

5. Dispositif d'absorption selon l'une des revendications précédentes, **caractérisé en ce que** le support comporte des éléments pour sa suspension.

6. Dispositif d'absorption selon la revendication 5, **caractérisé en ce que** les éléments de suspension sont constitués d'au moins un crochet relié de manière séparable à une base du support.

7. Dispositif d'absorption selon l'une des revendications précédentes, **caractérisé par** au moins un récipient relié sur sa face inférieure à l'emballage (aux emballages), pour recueillir l'humidité.

8. Dispositif d'absorption selon la revendication 7, **caractérisé en ce que** le(les) récipient(s) de collecte est(sont) fabriqué(s) dans une matière flexible.

9. Dispositif d'absorption selon la revendication 7 ou 8, **caractérisé en ce que** le(les) récipient(s) de collecte est(sont) fabriqué(s) avec l'emballage (les emballages).
